# EUROPÄISCHE PATENTANMELDUNG

(11) **EP 4 629 455 A1**
(43) Veröffentlichungstag der Anmeldung: **08.10.2025**
(21) Anmeldenummer: 25000031.2
(22) Anmeldetag: 24.03.2025
(51) Int. Cl.: H02B 1/03, H02B 1/24, H02B 1/42, H02B 1/48

(54) **HAUSSTROMUNTERVERTEILER**

(30) Priorität: 04.04.2024 DE 102024109434
(71) Anmelder: beegy GmbH, 65824 Schwalbach am Taunus (DE)
(72) Erfinder: Große, Michael, D-68307 Mannheim (DE); Schneider, Steffen, D-68169 Mannheim (DE); Ibach, Philipp Peter, D-67435 Neustadt an der Weinstraße (DE)
(74) Vertreter: Eickmeyer, Dietmar

(57) **Zusammenfassung**

Die Erfindung betrifft einen Hausstromunterverteiler (10, 70) mit einem Gehäuse (18), in dem ein erster Anschlussbereich (12) gelegen ist, der eine bestimmte Anzahl erster Verbindungselemente (74) zum bedarfsweisen Anschluss einer Verbindungsstromleitung (12) eines Hausstromnetzes aufweist, wobei an einem zweiten Anschlussbereich (86) im Gehäuse (12) eine der bestimmten Anzahl entsprechende Anzahl zweiter Verbindungselemente (88) zum bedarfsweisen Anschluss eines ersten Haustechnikgerätes mittels einer Verbindungsleitung angeordnet ist. Jedes erste Verbindungselement (74) ist durch eine Verteilerleitung (75) mit mehreren Leitern mit je einem zweiten Verbindungselement (88) durch entweder einen Verteilerleiter (76, 78, 80), einen Verteilerneutralleiter (82) oder einen Verteilerschutzleiter (84) elektrisch verbunden. Je ein erster Leitungsschutzschalter (92) ist in jedem Verteilerleiter (76, 78, 80) zwischen den entsprechenden ersten (74) und den zu den ersten korrespondierenden zweiten Verbindungselementen (88) elektrisch zwischengefügt. Zudem ist ein Smartmeter (20) im Gehäuse (18) angeordnet und so ausgestaltet, dass dieser in jede der Verteilerleiter (76, 78, 80) sowie dem Verteilerneutralleiter (82) zwischen den entsprechenden ersten Anschlusselementen (74) und dem ersten Leitungsschutzschalter (92) elektrisch zwischengefügt ist. Außerdem sind weitere dritten Anschlussbereiche vorgesehen an dem je ein weiteres Haustechnikgerät anschließbar ist. Die Erfindung betrifft einen Hausstromunterverteilersystem mit einem Hausstromunterverteiler (10) das mit einem Steuerungsgerät (26), das außerhalb des Gehäuses (18) angeordnet ist, zusammenarbeitet.

## Beschreibung

Die Erfindung betrifft einen Hausstromunterverteiler mit einem Gehäuse, in dem ein erster Anschlussbereich gelegen ist, der eine bestimmte Anzahl erster Verbindungselemente zum bedarfsweisen Anschluss einer Verbindungsstromleitung eines Hausstromnetzes aufweist, wobei an einem zweiten Anschlussbereich im Gehäuse eine der bestimmten Anzahl entsprechende Anzahl zweiter Verbindungselemente zum bedarfsweisen Anschluss eines ersten Haustechnikgerätes mittels einer Verbindungsleitung angeordnet ist, wobei jedes erste Verbindungselement durch eine Verteilerleitung mit mehreren Leitern mit je einem zweiten Verbindungselement durch entweder einen Verteilerleiter, einen Verteilerneutralleiter oder einen Verteilerschutzleiter elektrisch verbunden ist, und wobei je ein erster Leitungsschutzschalter in jedem Verteilerleiter zwischen den entsprechenden ersten und den zu den ersten korrespondierenden zweiten Verbindungselementen elektrisch zwischengefügt ist.

Um ein Gebäude mit Strom zu versorgen, ist es allgemein üblich, dass vom allgemeinen Stromnetz eine fünfadrige Netzstromleitung aus dem allgemeinen Stromnetz abgezweigt und bis ins Gebäude hinein verlegt wird. Die üblichen 5 Einzelleitungen oder Adern sind dann der Neutralleiter, der Schutzleiter sowie drei stromführende Phasen- oder Stromleiter L1, L2 sowie L3. Im Gebäude wird die Netzstromleitung an einen Netzstromzähler, der üblicherweise in einem Hausanschlusskasten angeordnet ist, angeschlossen und verplombt, sodass der vom Gebäude konsumierte Strom manipuliersicher erfasst wird. Ein Haustromnetz beginnt dann ab diesem Stromzähler und weist eine Vielzahl von Stromleitungen auf, die den Strom an benötigte Stellen im Gebäude verteilen. Häufig sind im Hausanschlusskasten zur Absicherung der einzelnen Stromkreise zusätzlich eine Anzahl von Sicherungsautomaten oder Leitungsschutzschaltern zwischen dem Stromzähler und den einzelnen Stromverbrauchern im Haus angeordnet. Im Zuge von technischen Veränderungen und Weiterentwicklungen der Haustechnik, wird das Hausstromnetz oft mit zusätzlichen Haustechnikgeräten ausgestattet und erweitert, wie beispielsweise mit einer oder mehreren Fotovoltaikanlagen, mit einer Wärmepumpe oder mit einer Ladestation für das Laden von Batterien eines Elektroautos, die separaten Leitungen am Hausstromnetz angeschlossen und mit zusätzlichen Sicherungsautomaten abgesichert sind.

Wird beispielsweise eine Fotovoltaikanlage als Haustechnikgerät einem Gebäude hinzugefügt, wird ein von Fotovoltaikmodulen bereitgestellter Gleichstrom in einem Wechselrichter in Wechselstrom gewandelt und über einen oder mehrere Sicherungsautomaten mit dem Hausstromnetz verbunden. Der Netzstromzähler ist dann ein Zweirichtungsstromzähler, der sowohl diejenige Strommenge in kWh erfasst, die von der Fotovoltaikanlage in das allgemeine Stromnetz eingespeist wird, als auch diejenige Strommenge in kWh, die das Gebäude vom Allgemeinstromnetz bezieht. Es ist zudem üblich, dass beide Strommengen des Zweirichtungsstromzählers zu beliebigen Zeitpunkten über eine optische Schnittstelle bedarfsweise ausgelesen werden können.

Häufig kommt es vor, dass im Hausanschlusskasten alle Plätze für Sicherungsautomaten bereits von den bestehenden Stromkreisen im Gebäude belegt sind. Dann kann es vorkommen, dass ein Unterverteiler zum Beispiel für notwendige weitere Sicherungsautomaten für das hinzuzufügen Haustechnikgerät installiert werden muss. Als Beispiel für einen solchen Unterverteiler sei der von der Firma ALMASOLAR Typ AC Box 32A 230 V AC genannt, der zum Anschluss einer Fotovoltaikanlage vorgesehen ist.

Nachteilig hierbei ist es, dass der Unterverteiler allein auf den Anschluss eines bestimmten Haustechnikgeräts abgestimmt ist. Soll dann ein weiteres Haustechnikgerät dem Gebäude hinzugefügt werden, beispielsweise eine Wallbox für das Laden von Batterien eines Elektroautomobils, muss ein anderer oder weiterer Unterverteiler gesetzt und verkabelt werden. Die bisher bekannt gewordenen Unterverteiler sind entsprechend wenig flexibel, potenziell fehleranfällig durch individuelle vor Ort Verkabelung zwischen den Unterverteilern und zudem nicht für den Ausbau des Gebäudes mit weiteren Haustechnikgeräten ausgestaltet.

Ausgehend von diesem Stand der Technik ist es Aufgabe der Erfindung, einen Hausstromunterverteiler der eingangs genannten Art anzugeben, an den wenigstens zwei Haustechnikgeräte anschließbar sind und der Montageaufwand dabei möglichst gering ist.

Die Aufgabe wird gelöst durch eine Hausstromunterverteiler der eingangs genannten Art. Der erfindungsgemäße Hausstromunterverteiler ist dadurch gekennzeichnet, dass ein Smartmeter im Gehäuse angeordnet und so ausgestaltet ist, dass dieser in jede der Verteilerleiter sowie dem Verteilerneutralleiter zwischen den entsprechenden ersten Anschlusselementen und dem ersten Leitungsschutzschalter elektrisch zwischengefügt ist, dass wenigstens an einem dritten Anschlussbereich im Gehäuse eine der bestimmten Anzahl entsprechende Anzahl dritter Verbindungselemente zum bedarfsweisen Anschluss eines weiteren Haustechnikgerätes mittels einer Verbindungsleitung je drittem Anschlussbereich angeordnet ist, dass jedes dritte Verbindungselement jedes dritten Anschlussbereiches durch je eine weitere Verteilerleitung mit mehreren Leitern mit je einer zwischen dem Smartmeter und dem ersten Leitungsschutzschalter gelegenen Abzweigstelle für jeden Leiter mit einem der Leiter der Verteilerleitung verbunden ist, so dass je ein zweites Verbindungselement und je ein korrespondierendes drittes Verbindungselement des wenigstens einen dritten Anschlussbereiches elektrisch parallelgeschaltet sind, dass jedem weiteren Verteilleiter einer weiteren Verteilleitung ein weiterer Leitungsschutzschalter zwischen einer Abzweigstelle und dem zu dieser Abzweigstelle korrespondierenden dritten Verbindungselement elektrisch zwischengefügt ist.

Die Grundidee der Erfindung besteht darin, dass der erfindungsgemäße Hausstromunterverteiler technisch so ausgestaltet ist, dass wenigstens zwei beziehungsweise wenigstens drei weitere Haustechnikgeräte - idealerweise jedoch eine Vielzahl von weiteren Haustechnikgeräten - an diesen anschließbar sind, ohne dass eine vor Ort Verkabelung im Hausstromunterverteiler hierfür notwendig wäre. Alle notwendigen elektrischen Verbindungen oder Sicherungsmaßnahmen, beispielsweise Leitungsschutzschalter, sind vorteilhafterweise bereits im Hausstromunterverteiler angeordnet und angeschlossen. Es werden lediglich externe Leitungen mit den dafür vorgesehenen Verbindungselementen des Hausstromunterverteilers verbunden und alle notwendigen elektrischen Verbindungen zwischen dem Hausstromnetz und den Haustechnikgeräten sind hergestellt. Hierdurch sind Verkabelungsfehler praktisch ausgeschlossen. Zudem ist es mit dem erfindungsgemäßen Hausstromunterverteiler möglich, zunächst ein erstes Haustechnikgerät an diesen anzuschließen. Soll zu einem späteren Zeitpunkt ein weiteres Haustechnikgerät an den Hausstromunterverteiler angeschlossen werden, ist dies auch mit verschiedensten Haustechnikgeräten möglich, ohne dass innerhalb des Hausstromunterverteilers eine Neuverkabelung oder einer Veränderung der vorhandenen Verkabelung erforderlich wäre. Als mögliches Haustechnikgerät kommen insbesondere eine Fotovoltaikanlage, eine Fotovoltaikanlage mit Batteriespeicher, eine Wallbox zum Laden von Batterien eines Elektroautos oder eine Wärmepumpe in Betracht. Es ist auch innerhalb des Erfindungsgedankens, dass mehrere der vorgenannten Haustechnikgeräte der gleichen Art an den Haustechnikverteiler angeschlossen werden, also beispielsweise zwei Fotovoltaikanlagen von denen eine oder beide auch mit einem Batteriespeicher zusammenarbeiten kann.

Besonders vorteilhaft ist es, dass der Hausstromunterverteiler mit einem Smartmeter für Strom ausgestattet ist, d.h. insbesondere einem intelligenten Zweirichtungsstromzähler, der über Kommunikationsmöglichkeiten zum Datenaustausch mit anderen technischen Geräten verfügt. Solche Smartmeter als solches sind dem Fachmann bekannt. Der im Hausstromunterverteiler angeordnete Smartmeter bietet den Vorteil, dass zu jeder Zeit die Stromflussrichtung und der Strombedarf bzw. die Stromabgabemenge des Gebäudes vom oder in das Hausstromnetz erfasst werden, ohne dass auf den Netzstromzähler im Zählerkasten zurückgegriffen werden müsste. Dort ist in der Regel nur das Auslesen von Zählerständen möglich und auch vergleichsweise aufwendig, da solche Netzstromzähler üblicherweise nur eine optische Schnittstelle zum Datenauslesen bereitstellen, also gerade keine Smartmeter sind.

Zudem bietet der erfindungsgemäße Hausstromunterverteiler dann die Möglichkeit der Stromzählung ohne andere Stromverbraucher des Hausstromnetzes, beispielsweise in dem die Stromverbraucher mit separaten Stromleitungen vom Zählerkasten des Hauses aus unmittelbar am Stromnetz angebunden sind. In diesem Fall erfasst der Smartmeter über den Strom der an ihm angeschlossen Haustechnikgeräte.

Eine vorteilhafte Ausgestaltung des Hausstromunterverteilers sieht vor, dass ein Fehlerstromschutzschalter in einer weiteren Verteilerleitung eines bestimmten dritten Anschlussbereiches zwischen dessen Abzweigstellen und dem entsprechenden weiteren Leitungsschutzschalter oder dem entsprechenden dritten Verbindungselement elektrisch zwischengefügt ist. Mit einem Fehlerstromschutzschalter ist es möglich, die Sicherheit für Personen während des Betriebs der Haustechnikgeräte zu erhöhen. Zudem ist es dann auch ermöglicht, Haustechnikgeräte anzuschließen, die erwartbar mit Personen in Kontakt geraten könnten, beispielsweise eine Wallbox oder eine Ladestation für Batterien, die in Autos verbaut sind.

Eine weitere Ausgestaltungsvariante des Hausstromunterverteilers ist dadurch gekennzeichnet, dass an wenigstens einem vierten Anschlussbereich im Gehäuse drei vierte Verbindungselemente zum bedarfsweisen Anschluss einer Stromleitung mit drei Leitern eines Hausstromverbrauchers je viertem Anschlussbereich angeordnet sind, dass durch Leiter einer Anschlussleitung ein erstes der vierten Verbindungselemente jedes vierten Anschlussbereiches mit einer Abzweigstelle von einem der Verteilerleiter, ein zweites der vierten Verbindungselemente jedes vierten Anschlussbereiches mit einer Abzweigstelle des Verteilerneutralleiters und ein drittes der vierten Verbindungselemente jedes vierten Anschlussbereiches mit einer Abzweigstelle des Verteilerschutzleiters elektrisch verbunden sind, dass jede dieser Abzweigstellen einer zwischen dem Smartmeter und dem ersten Leitungsschutzschalter angeordnet ist, und dass ein vierte Leitungsschutzschalter in den Verteilerleiter der Anschlussleitung zwischengefügt ist.

Auf diese Weise ist besonders einfach eine Anschlussstelle oder auch mehrere Anschlussstellen bei entsprechender Parallelschaltung mehrerer vierter Anschlussbereiche für eine 230V Stromversorgung bereitgestellt. Dort können unser Beispiel notwendige Geräte, wie beispielsweise ein Powerline-Gerät, ein Internetrouter oder eine Beleuchtung angeschlossen werden.

Das ist besonders einfach dann gewährleistet, wenn die vierten Verbindungselemente eines bestimmten vierten Anschlussbereiches als Steckdose ausgestaltet sind.

Eine weitere besonders vorteilhafte Ausgestaltung des Hausstromunterverteilers sieht vor, dass an einem fünften Anschlussbereich im Gehäuse eine der bestimmten Anzahl einsprechenden Anzahl fünfter Verbindungselemente zum bedarfsweisen Anschluss einer Stromleitung weiterer Hausstromverbraucher angeordnet sind, dass jedes fünfte Verbindungselement durch einen Leiter einer fünften Verteilerleitung mit mehreren Leitern mit je einer zwischen dem Smartmeter und dem ersten Leitungsschutzschalter gelegenen Abzweigstelle für jeden Leiter mit einem der Leiter der Verteilerleitung verbunden ist.

Durch diese Ausgestaltung ist es zum einen möglich, die Verbindungsstromleitung des Hausstromnetzes an dem fünften Anschlussbereich mit dem Hausstromunterverteiler zu verbinden. Das kann zum Beispiel dann der Fall sein, wenn der Smartmeter nicht benötigt oder unerwünscht ist oder vielleicht erst später eingebaut werden soll. Dann ist der fünfte Anschlussbereich als Stromeingangsseite von Strom vom Hausanschlusskasten über die Verbindungsstromleitung vorgesehen.

Es kann auch der Fall sein, dass die Verbindungsstromleitung am ersten Anschlussbereich angeschlossen wird, jedoch noch weitere Geräte oder einige oder alle Stromverbraucher in einem Gebäude, die nicht zu den Haustechnikgeräten zählen sollen am fünften Anschlussbereich angeschlossen werden. In diesem Fall ist der fünfte Anschlussbereich als Stromausgang aus dem Hausstromunterverteiler vorgesehen. Dann werden vom Smartmeter vorteilhafterweise auch die Stromverbräuche über den fünften Anschlussbereich mitgezählt. Auch diese Ausgestaltung erhöht die Flexibilität beim Einsatz des erfindungsgemäßen Hausstromunterverteilers.

Zudem ist es besonders vorteilhaft, wenn der Hausstromunterverteiler so ausgestaltet ist, dass ein Steuerungsgerät im Gehäuse angeordnet ist, dass das Steuerungsgerät zu dessen Stromversorgung mit einem der drei Verteilerleiter verbunden ist, dass das Steuerungsgerät mit dem Smartmeter mit einer Signalverbindung so verbunden ist, dass bedarfsweise Signale zwischen dem Steuerungsgerät und dem Smartmeter austauschbar sind oder wenigstens vom Smartmeter generierte Signale vom Steuerungsgerät empfangbar sind, dass das Steuerungsgerät mit dem Internet verbunden ist, dass das Steuerungsgerät mit jedem der an den zweiten oder dritten Verbindungselementen angeschlossenen Haustechnikgeräten für einen Daten- oder Signalaustausch mit einer separaten Signalverbindung verbunden ist, dass das Steuerungsgerät so eingerichtet ist, dass die angeschlossenen Haustechnikgeräte durch das Steuerungsgerät ansteuerbar sind.

Mit der technischen Integration des Steuerungsgeräts in den Hausstromunterverteiler sind diesem weitere technische Funktionen ermöglicht, die die Flexibilität bei dessen Einsatz erhöhen und zudem auch die Verkabelung vor Ort weiter reduzieren. Denn schließlich ist das Steuerungsgerät bereits vollständig mit dem Smartmeter verkabelt und auch durch eine entsprechende Verkabelung im Hausstromunterverteiler mit Strom versorgt. Die Haustechnikgeräte, die angeschlossen werden sollen können dann einfach sowohl mit ihrer Stromleitung als auch mit ihren Signalleitung an einem entsprechenden Anschlussbereich am Hausstromunterverteiler bzw. mit den Signalleitungen am Steuerungsgerät angeschlossen werden.

Dabei kann das Steuerungsgerät mit dem Smartmeter mit einem Datenkabel oder mit einer kabellosen Datenübermittlungsvorrichtung verbunden sein. Hier sind dem Fachmann eine Vielzahl von Verbindungsmöglichkeiten bekannt.

Eine weitere Variante sieht vor, dass zwischen dem Steuerungsgerät und der Anschlussleitung, mit dem das Steuerungsgerät zwecks Stromversorgung verbunden ist, ein Umspanngerät zwischengefügt ist, durch das eine von der Anschlussleitung zur Verfügung gestellte Spannung in eine vom Steuerungsgerät benötige Spannung umwandelbar ist. Diese Variante ist vor allem dann vorteilhaft, wenn das Steuerungsgerät die übliche Netzspannung von 230V Wechselstrom nicht in die benötigte Spannung für das Steuerungsgerät selbst umwandeln kann.

Bei einer weiteren Ausgestaltung des Hausstromunterverteilers ist es vorgesehen, dass das Steuerungsgerät mit einem Signalunterverteiler verbunden ist, durch den eine Signaleingang und -ausgang des Steuerungsgerätes mit einer Vielzahl von Signalverbindungen von Haustechnikgeräten verbindbar ist. Diese Ausgestaltungsvariante wird insbesondere dann fabelhaft angesetzt, wenn das Steuerungsgerät weniger Signaleingänge aufweist als Haustechnikgeräte an dieses angeschlossen werden sollen.

Die erfindungsgemäße Aufgabe wird auch gelöst durch ein Hausstromunterverteilersystem mit einem Hausstromunterverteiler das dadurch gekennzeichnet ist, dass ein Steuerungsgerät außerhalb des Gehäuses angeordnet ist, dass das Steuerungsgerät zu dessen Stromversorgung mit einer ersten Verbindungsleitung mit der Verteilerleitung im Hausstromunterverteiler verbunden ist, dass das Steuerungsgerät mit dem Smartmeter mit einer Signalverbindung so verbunden ist, dass bedarfsweise Signale zwischen dem Steuerungsgerät und dem Smartmeter austauschbar sind oder wenigstens vom Smartmeter generierte Signale vom Steuerungsgerät empfangbar sind, dass das Steuerungsgerät mit dem Internet verbunden ist, dass das Steuerungsgerät mit jedem der an den zweiten oder dritten Verbindungselementen angeschlossenen Haustechnikgeräten für einen Daten- oder Signalaustausch verbunden ist, dass das Steuerungsgerät so eingerichtet ist, dass die angeschlossenen Haustechnikgeräte durch das Steuerungsgerät ansteuerbar sind.

Auch auf diese Weise ist zur Erhöhung der Flexibilität des Einsatzes des Hausstromunterverteilersystems ein Steuerungsgerät in die Funktionalität des Hausstromunterverteilersystems integriert. Damit sind die gleichen technischen Vorteile wie vorstehend schon näher erläutert für den Einsatz eines Steuerungssystems erreicht. Gleichzeitig ist es aber auch möglich, das Steuerungsgerät beispielsweise näher beim Internetrouter oder bei einem anzuschließenden Haustechnikgerät oder bei einer separaten Stromversorgung zu positionieren. Hierdurch ist für die entsprechenden Anwendungsfälle eine erhöhte Flexibilisierung bei der Montage erreicht.

Dabei kann das Steuerungsgerät mit dem Smartmeter günstigerweise mit einem Datenkabel oder mit einer kabellosen Datenübermittlungsvorrichtung als Signalübermittlung oder Signalübermittlungsvorrichtung verbunden werden. Hier sind dem Fachmann eine Vielzahl von Verbindungsmöglichkeiten bekannt.

Eine weitere Ausgestaltung des Hausstromunterverteilersystems sieht vor, dass zwischen dem Steuerungsgerät und der Verteilerstromleitung, mit dem das Steuerungsgerät verbunden ist, ein Umspanngerät außerhalb des Hausstromunterverteiler s angeordnet und elektrisch zwischengefügt ist, durch welches Umspanngerät eine von der Verteilerstromleitung zur Verfügung gestellte Spannung in eine vom Steuerungsgerät benötige Spannung umgewandelt ist. Die entsprechenden Vorteile sind vorstehend bereits beschrieben.

Ein Hausstromunterverteilersystem kann auch so ausgestaltet sein, dass das Steuerungsgerät mit einem Signalunterverteiler verbunden ist, der außerhalb des Hausstromunterverteilers angeordnet ist und durch den eine Signaleingang und -ausgang des Steuerungsgerätes mit einer Vielzahl von Signalverbindungen von Haustechnikgeräten verbindbar ist.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen:
- Fig. 1: ein Übersichtsplan eines Hausstromnetzes mit einem ersten Hausstromunterverteiler sowie
- Fig. 2: ein Beispiel eines zweiten Hausstromunterverteilers.

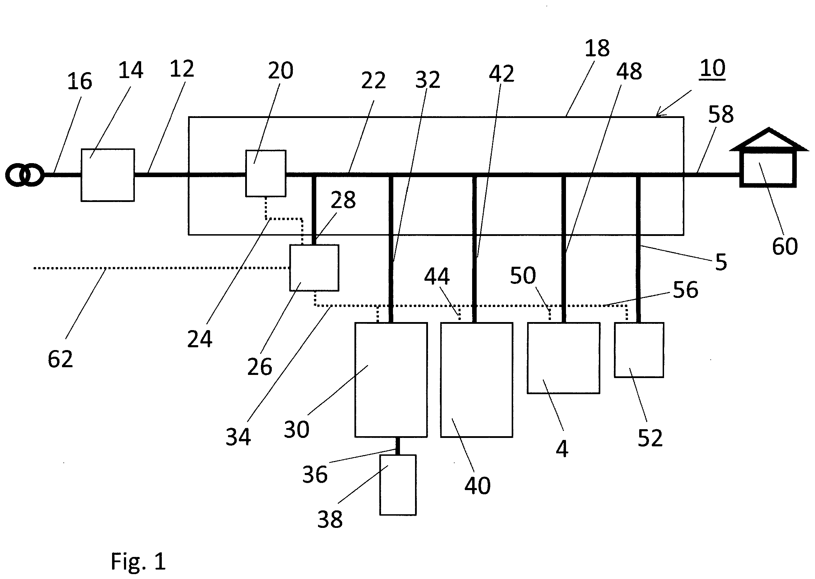

Figur 1 zeigt einen Übersichtsplan eines Hausstromnetzes mit einem ersten Hausstromunterverteilers 10, der mit einer Verbindungsstromleitung 12 mit einem Netzstromzähler 14 elektrisch verbunden ist. Der Netzstromzähler 14 ist andererseits mittels einer fünfadrigen Netzstromleitung 16 mit dem allgemeinen Stromnetz, einem dreiphasigen Wechselstromnetz, verbunden. Im gewählten Beispiel soll der Netzstromzähler 14 in einem Zählerkasten angeordnet sein.

In einem Gehäuse 18 des ersten Hausstromunterverteilers 10 ist die fünfadrige Verbindungsstromleitung 12, nämlich mit drei stromführenden Stromleitungen, einem Neutralleiter sowie einem Schutzleiter über eine Stromleitung mit fünf Einzelleitern mit einer Eingangsseite eines Smartmeters 20 für Strom verbunden. Eine Ausgangsseite des Smartmeters 20 verlängert mit einer den Adern entsprechenden Anzahl von Sammelschienen 22 die Phasenleiter, den Neutralleiter sowie den Schutzleiter zur Anbindung von weiteren Haustechnikgeräten im ersten Hausstromverteiler 10. Das erste Gehäuse 18 ist so ausgestaltet, dass es wenigstens den Schutzstandard IP54 erfüllt. Es kann aber auch für eine höhere Schutzklasse, beispielsweise nach IP66, ausgestaltet sein und ist derart geeignet, auch im Außenbereich, also außerhalb des Gebäudes im Freien installiert werden.

Die Stromleitungen sind im Übersichtsplan mit schwarzen durchgezogenen Linien dargestellt. So ist auf der Figur ersichtlich, dass an den Smartmeter 20 noch eine weitere Leitung, nämlich eine erste Signalleitung 24 anschließt, die als punktierte Linie dargestellt ist. Die erste Signalleitung 24 ist zudem an ihrem anderen Ende an einem Steuergerät 26 angeschlossen, welches zudem mit einer ersten Verbindungsleitung 28 für Strom an den Sammelschienen 22 angeschlossen ist. Zudem ist an den Sammelschienen 22 ein erster Wechselrichter 30 als erstes Haustechnikgerät mit einer zweiten Verbindungsleitung 32 angeschlossen, welchem ersten Wechselrichter 30 von in der Figur nicht dargestellten Fotovoltaikmodulen Gleichstrom zugeleitet wird. Der Gleichstrom wird vom ersten Wechselrichter 30 in Wechselstrom wandelt, bevor dieser durch die zweite Verbindungsleitung den Sammelschienen 22 zugeleitet wird. Der erste Wechselrichter 30 ist zudem mit einer zweiten Signalleitung 34 mit dem Steuerungsgerät 26 verbunden. Der Übersichtlichkeit halber sind die einzelnen Signalleitungen von den Haustechnikgeräten zum Steuerungsgerät 26 nicht einzelnen dargestellt, sondern lediglich als eine einzelne punktierte Linie. Es sollen jedoch jedes Haustechnikgerät mit jeweils einer separaten Signalleitung mit dem Steuerungsgerät 26 verbunden sein. Anstatt einer Signalleitung kommen auch andere Übermittlungsarten, beispielsweise eine Signalübermittlung mit WLAN oder Bluetooth oder andere dem Fachmann bekannten Standards in Betracht. Im gewählten Ausführungsbeispiel soll der erste Wechselrichter 30 zudem mit einer Batterieleitung 36 an einen Batteriespeicher 38 angeschlossen sein. Der erste Wechselrichter 30 ist mit einer entsprechenden Steuerungseinheit auch dafür eingerichtet, den Batteriespeicher 38 bedarfsweise zu laden oder den dort gespeicherten Strom bedarfsweise zu den Sammelschienen 22 zu leiten.

Als zweites Haustechnikgerät ist ein zweiter Wechselrichter 40 mit einer dritten Verbindungsleitung 42 mit den Sammelschienen 22 und mit einer dritten Signalleitung 44 mit dem Steuerungsgerät 26 verbunden. Als drittes Haustechnikgerät ist eine so genannte Wallbox 46 mit einer vierten Verbindungsleitung 48 mit den Sammelschienen 22 sowie mit einer vierten Signalleitung 20 mit dem Steuerungsgerät 26 verbunden. Des Weiteren ist als viertes Haustechnikgerät eine Wärmepumpe 52 mit einer fünften Verbindungsleitung 54 mit den Sammelschienen 22 sowie mit einer fünften Signalleitung 56 mit dem Steuerungsgerät 26 verbunden. Schließlich sind die Sammelschienen 22 über eine sechste Verbindungsleitung 58 mit einem Hausstromnetz 60 verbunden, dass in der gezeigten Figur durch ein Haus-Symbol dargestellt ist.

Wie aus der Figur 1 ersichtlich wird, sind alle Haustechnikgeräte über Verbindungsleitungen mit den Sammelschienen 22 verbunden und zudem mit Signalleitung mit dem Steuerungsgerät 26. Das Steuerungsgerät 26 erhält zudem ständig vom Smartmeter 20 gemessene Stromwerte, sodass dem Steuerungsgerät 26 zu jedem Zeitpunkt bekannt ist, ob das Hausstromnetz gerade vom allgemeinen Stromnetz Strom bezieht oder die Fotovoltaikanlagen mehr Strom produzieren als das Hausnetz benötigt und der überschüssige Strom in das allgemeine Stromnetz eingespeist wird. Je nach Vorgaben an das Steuerungsgerät 26 kann dieses über die verschiedenen Signalleitungen die Steuerung oder die Einstellungen an den Haustechnikgeräten vornehmen. Beispielsweise kann der erste Wechselrichter 30 dazu veranlasst werden, der von seinen Solarmodulen erzeugten Strom vorranging in den Batteriespeicher 38 zu laden bis dieser vollständig geladen ist und erst dann überschüssigen Strom in das allgemeine Stromnetz abzugeben. Entsprechend ist eine Vielzahl von Steuerungs- und Einstellmöglichkeiten durch das Steuerungsgerät 26 denkbar. Zudem ist das Steuerungsgerät 26 mit einer Anschlussleitung 62 mit dem Internet verbunden, sodass über das Internet ein Signalaustausch mit Datenbanken oder Dienstleistungsunternehmen hergestellt werden kann, die beispielsweise Statistiken über Stromverbrauch des Hausstromnetzes, über den Bezug von Strom aus dem allgemeinen Stromnetz, über Autarkiequoten oder über Ähnliches in einem Internetportal bereitstellen oder Signale und Daten zum Steuerungsgeräts 26, so dass dort beispielsweise Softwareupdates für die Software des Steuerungsgeräts 26 oder Einstellungen vorgenommen werden können.

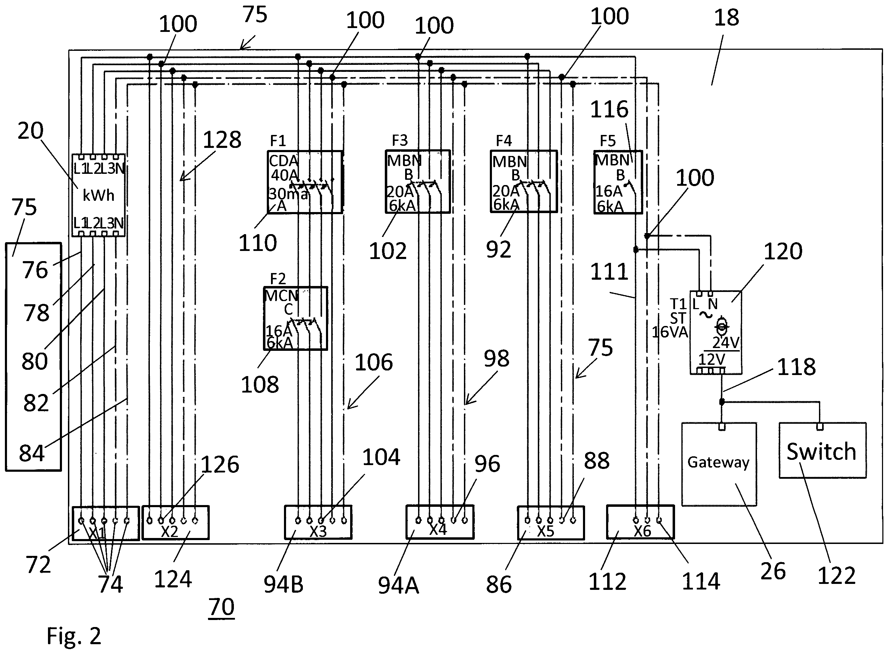

Die Fig. 2 zeigt ein Beispiel eines zweiten Hausstromunterverteilers 70 anhand eines Stromlaufplans für einen üblichen dreiphasigen Stromanschluss mit 5 Stromadern. Dabei sind für sich entsprechende Bauteile wie bei dem ersten Hausstromunterverteiler 10 gleiche Bezugszeichen gewählt. In dem Gehäuse 18 sind alle wesentlichen elektrischen Leitungen und Bauelemente angeordnet, so dass lediglich noch Stromleitungen oder Signalleitungen an die entsprechenden Verbindungselemente angeschlossen werden müssen. Als Verbindungselemente kommen beispielsweise Klemmverbindungen, wie Schraubklemmen oder Federklemmen, Rastverbindungen oder standardisierte Steckverbindung in Betracht.

Dazu weist der zweite Hausstromunterverteiler 70 einen ersten Anschlussbereich 72 auf, in dem fünf erste Verbindungselemente 74 angeordnet sind, und zwar - in der Figur von links nach rechts gesehen - je ein erstes Verbindungselement 74 für eine erste Phasenleitung L1, für eine zweite Phasenleitung L2, für eine dritten Phasenleitung L3, für einen Neutralleiter N sowie für einen Schutzleiter PE, die im gewählten Beispiel als Schraubklemmen ausgestaltet sind. Die ersten Verbindungselemente 74 sind für den Anschluss der dreiphasigen Verbindungsstromleitung 12 gemäß Figur 1 vorgesehen, die fünf Einzelleitungen aufweist, deren Funktion vorstehend beschrieben wurde. Das bedeutet, dass die erste Phasenleitung L1 der Verbindungsstromleitung 12 an das korrespondierende erste Verbindungselement 74 - in der Figur das linke der ersten Verbindungselemente 74 im ersten Anschlussbereich 72 - angeschlossen wird. Entsprechend wird mit den weiteren Leitungen der Verbindungsstromleitung 12 verfahren, bis alle Leitungen an die korrespondierenden ersten Verbindungselemente 74 angeschlossen sind.

Jede der ersten Verbindungselemente 74 ist an einen von fünf Leitern einer Verteilerleitung 75 angeschlossen, wobei die drei linken ersten Verbindungselemente 74 für die Stromphasen an einen ersten 76, an einen zweiten 78 sowie einen dritten Verteilerstromleiter 80 angeschlossen sind. Ein viertes erstes Verbindungselement 74 ist mit einem Verteilerneutralleiter 82 verbunden, während ein fünftes erstes Verbindungselement 74 an einen Verteilerschutzleiter 84 angeschlossen ist. Zur Verdeutlichung, dass die Verteilerleitung 75 fünf Leiter aufweist, sind die Bezugszeichen in der Figur für die Leiter eingerahmt und mit dem Bezugszeichen Verteilerleitung versehen. Andere Verteilerleitungen in der Figur sind ebenfalls mit fünf Leitern ausgestaltet, jedoch zur Vereinfachung nur noch mit einem Bezugszeichen versehen.

Alle diese Verteilerleiter führen zu einem zweiten Anschlussbereich 86 mit fünf zweiten Verbindungselementen 88, von denen je eine an eine der Verteilerleiter angeschlossen ist. Hierbei ist es zweckmäßig, das korrespondierende erste 74 und zweite Verbindungselemente 88, also Verbindungselemente die an den gleichen Verbindungsleiter angeschlossen ist, auch bei der Klemmenanordnung im ersten 72 und zweiten Anschlussbereich 86 an derselben Stelle zu finden sind, die Klemmenanordnung im ersten 72 und zweiten Anschlussbereich 86 also identisch sind. In die Verteilerleiter 76, 78, 80 sowie den Verteilerneutralleiter 84 ist ein Smartmeter 20 elektrisch zwischengefügt, also in den Strompfad jeder einzelnen dieser Verteilerleiter eingefügt. Der Smartmeter 20 ist ein intelligenter Stromzähler, der neben dem Überwachen, Zählen und Registrieren der Stromflüsse der einzelnen Phasen L1, L2, L3 auch eine Verbindung mit einem Steuerungsgerät 26 zur Übermittlung oder dem Empfang von Daten oder Signalen ermöglicht, wobei diese Verbindung in der Figur jedoch nicht dargestellt ist. Der in diesem Ausführungsbeispiel dargestellte Smartmeter 20 ist fest im Gehäuse 18 montiert. Es ist aber auch innerhalb des Erfindungsgedankens, wenn ein Smartmetersockel mit dem Gehäuse 18 verbunden und in die Verteilerleitungen zwischengefügt ist, wobei dann die Montage des Smartmeters 20 auf dem Smartmetersockel erfolgt. Die Verwendung des Begriffes Smartmeter im Sinne dieser Erfindung umfasst also ein Smartmeter oder/und einen Smartmetersockel. Das hat den Vorteil, dass der Smartmeter 20 beispielsweise bei einem Schaden leicht ausgetauscht werden kann oder bei sich ändernden technischen Anforderungen ein anderer Smartmeter 20 leicht in den zweiten Hausstromunterverteiler 70 einsetzbar ist.

In die Verteilerleiter 76, 78, 80 ist zwischen dem Smartmeter 20 und den zweiten Verbindungselementen 88 zudem je ein Leitungsschutzschalter 92 elektrisch zwischengefügt, also in den Strompfad jeder einzelnen dieser Verteilerleiter eingefügt. Dies entspricht den allgemeinen Standards zum Schutz der elektrischen Verbindung am zweiten Anschlussbereich 86. Der Verteilerschutzleiter 84 weist keine Zwischenfügungen auf und verbindet das entsprechende erste Verbindungselement 74 unmittelbar mit dem korrespondierenden zweiten Verbindungselement 88. An die zweiten Verbindungselemente 88 können alle Haustechnikgeräte angeschlossen werden, die mit dem Leitungsschutzschalter 92 geschützt sind, also beispielsweise ein Wechselrichter einer Solaranlage oder eine Wärmepumpe.

Zudem zeigt die Figur zwei dritte Anschlussbereiche 94A, 94B, wobei der erste dritte Anschlussbereich 94A fünf dritte Verbindungselemente 96 aufweist, die mit dritten Verteilerleitungen 98 an die korrespondierenden Verteilerleiter zwischen dem Smartmeter 20 und je nach Verteilerleiter entweder dem Leitungsschutzschalter 92 oder den zweiten Verbindungselementen 88 angeordnet sind. Die Verbindung der dritten Verteilerleitung 98 mit den korrespondierenden Verteilerleitern erfolgt an Abzweigstellen 100, die in der Figur als schwarze Punkte gekennzeichnet sind und von denen nur einige exemplarisch mit entsprechenden Bezugszeichen versehen sind. Eine solche Abzweigstelle 100 kann beispielsweise eine Klemme sein, an der Verbindungsstücke oder Leitungsenden der betreffenden Leiter elektrisch verbunden werden oder eine Abzweigstelle 100 ist an einer Stromschiene als Leiter der Verteilerleitung angebracht, auf die zwecks elektrischer Verbindung entsprechende Verbindungsstücke auf geklemmt, aufgesteckt oder aufgeschraubt sind. Weitere Leitungsschutzschalter 102 sind in jeder Phasenleitungen L1, L2, L3 der dritten Verteilerleitungen 98 zwischen den betreffenden Abzweigstellen 100 und den entsprechenden dritten Verbindungselementen 96 eingefügt, während ein Neutralleiter sowie ein Schutzleiter der dritten Verbindungsleitungen 98 die entsprechende Abzweigstelle 100 mit den korrespondierenden dritten Verbindungselement 96 unmittelbar verbinden. In der Figur ist nicht jeder Leitungsschutzschalter mit einem separaten Bezugszeichen versehen, um die Figur nicht mit Bezugszeichen zu überladen. Auf diese Weise ist der erste dritte Anschlussbereich 94A dafür eingerichtet, dass ein weiteres Haustechnikgerät, auch hier sei als Beispiel eine Fotovoltaikanlage oder eine Wärmepumpe genannt, an diesen Anschlussbereich anschließbar ist.

Der zweite dritte Anschlussbereich 94B weist wiederum fünf weitere dritte Verbindungselemente 104 auf, die jeweils mit einer weiteren dritten Verteilerleitung 106 verbunden sind. Die weiteren dritten Verteilerleiter der dritten Verteilerleitung 106 sind wiederum zu entsprechenden Abzweigstellen 100 geführt und an diesen mit den entsprechenden Verteilerleiter verbunden. Zusätzliche weitere Leitungsschutzschalter 108 sind in Phasenleitungen L1, L2, L3 der zusätzlichen Verteilerleiter der dritten Verteilerleitungen 108 zwischen den betreffenden Abzweigstellen 100 und den entsprechenden dritten Verbindungselementen 104 eingefügt, während ein Neutralleiter sowie ein Schutzleiter der zusätzlichen dritten Verbindungsleitung 104 die entsprechende Abzweigstelle 100 mit den korrespondierenden dritten Verbindungselement 104 unmittelbar verbinden. Des Weiteren ist ein Fehlerstromschutzschalter 110 in die Phasenleitungen L1, L2, L3 sowie dem Neutralleiter der weiteren dritten Verteilerleitung 106 zwischengeschaltet und zwar zwischen die zusätzlichen weiteren Leitungsschutzschalter 108 und den entsprechenden Abzweigstellen 100 bzw. zwischen dem entsprechenden weiteren dritten Verbindungselement 104 für den Neutralleiter und der korrespondierenden Abzweigstelle 100. Auf diese Weise ist der zweite dritte Anschlussbereich 94B dafür ausgestaltet, dass hier auch ein Haustechnikgerät mit besonderen Schutzanforderungen, beispielsweise eine Wallbox zum Laden von Batterien eines Automobils, anschließbar ist.

Die Figur zeigt einen vierten Anschlussbereich 112 mit drei vierten Verbindungselementen 114. Jede der vierten Verbindungselemente 114 ist an einen Leiter einer Anschlussleitung 116 angeschlossen, von denen wiederum jeweils einer an den ersten Verteilerleiter 76, an den Verteilerneutralleiter sowie an den Verteilerschutzleiter an entsprechenden Abzweigstellen 100 angeschlossen ist. Die Abzweigstelle 100 an dem ersten Verteilerleiter 76 ist dabei zwischen dem Smartmeter 20 und dem Leitungsschutzschalter 92 positioniert. Zudem ist zwischen dieser Abzweigstelle 100 und dem entsprechenden vierten Anschlusselement 114 ein vierter Leitungsschutzschalter 116 im Leitungspfad des entsprechenden Leiters der Anschlussleitung 100 angeordnet, sodass auch diese Phasenleitungen durch einen Leitungsschutzschalter gesichert ist. Der vierte Anschlussbereich 112 ist derart für den Anschluss von üblichen Haushaltsgeräten, die 220V bis 240V Wechselstrom benötigen, vorgesehen. Daher können die vierten Verbindungselemente 114 Beispielsweise auch vorteilhaft als eine Steckdose, als eine zusätzliche oder als mehrere, dann parallel geschalteten Steckdosen ausgestaltet sein.

Im gewählten Ausführungsbeispiel dieser Figur ist im Gehäuse 18 zusätzlich das Steuerungsgerät 26 angeordnet, dass mit einer Niederspannungsleitung 118 an einen 12 V DC Anschluss eines Umspanngeräts 120 angeschlossen ist. Das Umspanngerät 120 bezieht seinen Strom von der Anschlussleitung 110, und ist dafür ausgestaltet, eine Spannung von einem 230V Wechselstrom in einen Gleichstrom, zum Beispiel 12V, 6V, 5V usw. zu wandeln, wofür verschiedene Niederspannungsanschlüsse am Umspanngerät 120 vorgesehen sind. Dabei wandelt das Umspanngerät 120 die Spannung auf elektronischem Wege oder auch über eine Spulenanordnung. Der 12 V DC Anschluss des Umspanngeräts 120 versorgt zudem noch einen Signalunterverteiler 122, der mit dem Steuerungsgerät 26 zusammenarbeitet und dazu im Ausführungsbeispiel Beispiel mit nur einem Signalkabel an dieses angeschlossen ist. An den Signalunterverteiler 122 können jedoch eine Vielzahl von Signalkabeln angeschlossen werden oder eine Vielzahl von mit einer Funktechnik übermittelte Signale verwaltet und bedarfsweise an das Steuerungsgerät 26 über das eine Signalkabel weitergeleitet werden. Das Signalkabel oder sonstige Signalverbindungen sind in der Figur jedoch nicht gezeigt.

Außerdem ist in der Figur ein fünfter Anschlussbereich 124 mit fünften Verbindungselementen 126 gezeigt, bei dem die fünften Verbindungselemente 126 mit einer fünfadrigen fünften Verteilerleitung 128 mit mehreren Abzweigstellen 100 mit der Verteilerleitung 75 elektrisch verbunden sind, und zwar zwischen dem Smartmeter 20 und dem ersten Leitungsschutzschalter 92. Die fünfte Verteilerleitung 128 bzw. der fünfte Anschlussbereich 124 kann vorteilhafterweise im Wesentlichen für zwei Funktionen eingesetzt werden. Zum einen kann am fünften Anschlussbereich der Verbindungsstromleiter 12 angeschlossen werden, der sonst am ersten Anschlussbereich 72 angeschlossen wird. In dieser Variante dient der fünfte Anschlussbereich 124 als parallele Einspeisestelle für Strom aus dem allgemeinen Stromnetz zum ersten Anschlussbereich 72, so dass der Smartmeter 20 elektrische gebeipasst wird. Diese Variante wird vor allem dann verwendet, wenn ein Einsatz des Smartmeters 20 nicht oder erst später zum Beispiel bei einem Anschluss eines anderen Haustechnikgerätes verwendet werden soll. In diesem Fall kann sogar der Einbau des Smartmeters 20 unterbleiben.

Zum andern kann die Verbindungsstromleitung 12 am ersten Anschlussbereich 72 angeschlossen sein. Dann steht der fünfte Anschlussbereich für den Anschluss anderer Stromverbraucher des Gebäudes zur Verfügung. Hierbei besteht dann der Vorteil darin, dass auch der Stromverbrauch der anderen Stromverbraucher mit dem Smartmeter 20 gemessen wird.

Der in der Figur gezeigte Stromlaufplan gibt zudem bewusst keinerlei Hinweise darauf, wo genau im Gehäuse 18 die Anschlussbereiche für Stromverbindungen oder Signalverbindungen, sofern diese als kabelgebundene Signalverbindungen ausgestaltet sind, angeordnet sind. So kann es zu Beispiel sein, dass die Netzstromleitung auf einer Seite des Gehäuses 18 angeordnet ist, während alle Anschlussbereiche für Haustechnikgeräte auf einer anderen Seite des Gehäuses 18 angeordnet sind und die Anschlüsse Signalunterverteilers 120 vielleicht auf einer weiteren Seite des Gehäuses 18 angeordnet sind. Dies alles soll vom Erfindungsgedanken umfasst sein.

### Bezugszeichenliste

- 10: erste Hausstromunterverteiler
- 12: Verbindungsstromleitung
- 14: Netzstromzähler
- 16: Netzstromleitung
- 18: Gehäuse
- 20: Smartmeter
- 22: Sammelschienen
- 24: erstes Signalleitung
- 26: Steuerungsgerät
- 28: erste Verbindungsleitung
- 30: erster Wechselrichter
- 32: zweite Verbindungsleitung
- 34: zweite Signalleitung
- 36: Batterieleitung
- 38: Batteriespeicher
- 40: zweiter Wechselrichter
- 42: dritte Verbindungsleitung
- 44: dritte Signalleitung
- 46: Wallbox
- 48: vierte Verbindungsleitung
- 50: vierte Signalleitung
- 52: Wärmepumpe
- 54: fünfte Verbindungsleitung
- 56: fünfte Signalleitung
- 58: sechste Verbindungsleitung
- 60: Hausstromnetz
- 62: Anschlussleitung
- 70: zweite Hausstromunterverteiler
- 72: erster Anschlussbereich
- 74: erste Verbindungselemente
- 75: Verteilerleitungen
- 76: erster Verteilerleiter
- 78: zweiter Verteilerleiter
- 80: dritter Verteilerleiter
- 82: Verteilerneutralleiter
- 84: Verteilerschutzleiter
- 86: zweiter Anschlussbereich
- 88: zweite Verbindungselemente
- 92: erste Leitungsschutzschalter
- 94: dritter Anschlussbereich
- 94A: dritter Anschlussbereich A
- 94B: dritter Anschlussbereich B#
- 96: dritte Verbindungselemente
- 98: dritte Verteilerleitungen
- 100: Abzweigstellen
- 102: weitere Leitungsschutzschalter
- 104: weitere dritte Verbindungselemente
- 106: weitere dritte Verteilerleitungen
- 108: zusätzliche weitere Leitungsschutzschalter
- 110: Fehlerstromschutzschalter
- 111: Anschlussleitung
- 112: vierter Anschlussbereich
- 114: vierte Anschlusselemente
- 116: vierter Leitungsschutzschalter
- 118: Niederspannungsleitung
- 120: Umspanngerät
- 122: Signalunterverteiler
- 124: fünfter Anschlussbereich
- 126: fünfte Verbindungselemente
- 128: fünfte Verteilerleitung

## Patentansprüche

1. Hausstromunterverteiler (10, 70) mit einem Gehäuse (18), in dem ein erster Anschlussbereich (12) gelegen ist, der eine bestimmte Anzahl erster Verbindungselemente (74) zum bedarfsweisen Anschluss einer Verbindungsstromleitung (12) eines Hausstromnetzes aufweist, wobei an einem zweiten Anschlussbereich (86) im Gehäuse (12) eine der bestimmten Anzahl entsprechende Anzahl zweiter Verbindungselemente (88) zum bedarfsweisen Anschluss eines ersten Haustechnikgerätes mittels einer Verbindungsleitung angeordnet ist, wobei jedes erste Verbindungselement (74) durch eine Verteilerleitung (75) mit mehreren Leitern mit je einem zweiten Verbindungselement (88) durch entweder einen Verteilerleiter (76, 78, 80), einen Verteilerneutralleiter (82) oder einen Verteilerschutzleiter (84) elektrisch verbunden ist, und wobei je ein erster Leitungsschutzschalter (92) in jedem Verteilerleiter (76, 78, 80) zwischen den entsprechenden ersten (74) und den zu den ersten korrespondierenden zweiten Verbindungselementen (88) elektrisch zwischengefügt ist,
**dadurch gekennzeichnet, dass**
ein Smartmeter (20) im Gehäuse (18) angeordnet und so ausgestaltet ist, dass dieser in jede der Verteilerleiter (76, 78, 80) sowie dem Verteilerneutralleiter (82) zwischen den entsprechenden ersten Anschlusselementen (74) und dem ersten Leitungsschutzschalter (92) elektrisch zwischengefügt ist, dass wenigstens an einem dritten Anschlussbereich (94A, 94B) im Gehäuse (18) eine der bestimmten Anzahl entsprechende Anzahl dritter Verbindungselemente (96, 104) zum bedarfsweisen Anschluss eines weiteren Haustechnikgerätes mittels einer Verbindungsleitung je drittem Anschlussbereich (94A, 94B) angeordnet ist, dass jedes dritte Verbindungselement (96, 104) jedes dritten Anschlussbereiches (94A, 94B) durch je eine weitere Verteilerleitung (98, 106) mit mehreren Leitern mit je einer zwischen dem Smartmeter (20) und dem ersten Leitungsschutzschalter (92) gelegenen Abzweigstelle (100) für jeden Leiter mit einem der Leiter der Verteilerleitung (75) verbunden ist, so dass je ein zweites Verbindungselement (88) und je ein korrespondierendes drittes Verbindungselement (96, 104) des wenigstens einen dritten Anschlussbereiches (94A, 94B) elektrisch parallelgeschaltet sind, und dass jedem weiteren Verteilleiter einer weiteren Verteilleitung (98, 104) ein weiterer Leitungsschutzschalter (102, 108) zwischen einer Abzweigstelle (100) und dem zu dieser Abzweigstelle (100) korrespondierenden dritten Verbindungselement (96,104) elektrisch zwischengefügt ist.

2. Hausstromunterverteiler (10, 20) nach Anspruch 1, **dadurch gekennzeichnet, dass** ein Fehlerstromschutzschalter (110) in einer weiteren Verteilerleitung (98, 106) eines bestimmten dritten Anschlussbereiches (94A, 94B) zwischen dessen Abzweigstellen (100) und dem entsprechenden weiteren Leitungsschutzschalter (102, 108) oder dem entsprechenden dritten Verbindungselement (96, 104) elektrisch zwischengefügt ist.

3. Hausstromunterverteiler (10, 20) nach Anspruch 1 oder 2, **dadurch gekennzeichnet, dass** an wenigstens einem vierten Anschlussbereich (112) im Gehäuse (18) drei vierte Verbindungselemente (114) zum bedarfsweisen Anschluss einer Stromleitung mit drei Leitern eines Hausstromverbrauchers je viertem Anschlussbereich angeordnet sind, dass durch Leiter einer Anschlussleitung (111) ein erstes der vierten Verbindungselemente (114) jedes vierten Anschlussbereiches (112) mit einer Abzweigstelle (100) von einem der Verteilerleiter (76, 78, 80), ein zweites der vierten Verbindungselemente (114) jedes vierten Anschlussbereiches (112) mit einer Abzweigstelle (100) des Verteilerneutralleiters und ein drittes der vierten Verbindungselemente (114) jedes vierten Anschlussbereiches (112) mit einer Abzweigstelle (100) des Verteilerschutzleiters elektrisch verbunden sind, und dass jede dieser Abzweigstellen (100) einer zwischen dem Smartmeter (20) und dem ersten Leitungsschutzschalter (92) angeordnet ist, und dass ein vierte Leitungsschutzschalter (116) in den Verteilerleiter der Anschlussleitung (111) zwischengefügt ist.

4. Hausstromunterverteiler (10, 20) nach Anspruch 3, **dadurch gekennzeichnet, dass** die vierten Verbindungselemente (114) eines bestimmten vierten Anschlussbereiches (112) als Steckdose ausgestaltet sind.

5. Hausstromunterverteiler (10, 20) nach einem der vorgenannten Ansprüche, **dadurch gekennzeichnet, dass** an einem fünften Anschlussbereich (124) im Gehäuse (18) eine der bestimmten Anzahl einsprechenden Anzahl fünfter Verbindungselemente (126) zum bedarfsweisen Anschluss einer Stromleitung weiterer Hausstromverbraucher angeordnet sind, und dass jedes fünfte Verbindungselement (126) durch einen Leiter einer fünften Verteilerleitung (128) mit mehreren Leitern mit je einer zwischen dem Smartmeter (20) und dem ersten Leitungsschutzschalter (92) gelegenen Abzweigstelle (100) für jeden Leiter mit einem der Leiter der Verteilerleitung (75) verbunden ist.

6. Hausstromunterverteiler (10, 20) nach einem der vorgenannten Ansprüche, **dadurch gekennzeichnet, dass** ein Steuerungsgerät (26) im Gehäuse (18) angeordnet ist, dass das Steuerungsgerät (26) zu dessen Stromversorgung mit einem der drei Verteilerleiter (76, 78, 80) verbunden ist, dass das Steuerungsgerät (20) mit dem Smartmeter (20) mit einer Signalverbindung so verbunden ist, dass bedarfsweise Signale zwischen dem Steuerungsgerät (26) und dem Smartmeter (20) austauschbar sind oder wenigstens vom Smartmeter (20) generierte Signale vom Steuerungsgerät (26) empfangbar sind,
dass das Steuerungsgerät (26) mit dem Internet verbunden ist, dass das Steuerungsgerät (26) mit jedem der an den zweiten (88) oder dritten Verbindungselementen (96, 104) angeschlossenen Haustechnikgeräten für einen Daten- oder Signalaustausch mit einer separaten Signalverbindung verbunden ist, und dass das Steuerungsgerät (26) so eingerichtet ist, dass angeschlossene Haustechnikgeräte durch das Steuerungsgerät (26) ansteuerbar sind.

7. Hausstromunterverteiler (10, 20) nach Anspruch 6, **dadurch gekennzeichnet, dass** das Steuerungsgerät (26) mit dem Smartmeter (29) mit einem Datenkabel oder mit einer kabellosen Datenübermittlungsvorrichtung als Signalverbindung verbunden ist.

8. Hausstromunterverteiler (10, 20) nach Anspruch 6 oder 7, **dadurch gekennzeichnet, dass** zwischen dem Steuerungsgerät (26) und der Anschlussleitung (111), mit dem das Steuerungsgerät (26) zwecks Stromversorgung verbunden ist, ein Umspanngerät (120) zwischengefügt ist, durch das eine von der Anschlussleitung (111) zur Verfügung gestellte Spannung in eine vom Steuerungsgerät (26) benötige Spannung umwandelbar ist.

9. Hausstromunterverteiler (10, 20) nach einem der Ansprüche 6 bis 8, **dadurch gekennzeichnet, dass** das Steuerungsgerät (26) mit einem Signalunterverteiler (122) verbunden ist, durch den ein Signaleingang- oder/und ein -ausgangselement des Steuerungsgerätes (26) mit einer Vielzahl von Signalverbindungen von Haustechnikgeräten verbindbar ist.

10. Hausstromunterverteilersystem mit einem Hausstromunterverteiler (10) nach einem der vorgenannten Ansprüche 1 bis 6 **dadurch gekennzeichnet, dass** ein Steuerungsgerät (26) außerhalb des Gehäuses (18) angeordnet ist, dass das Steuerungsgerät (26) zu dessen Stromversorgung mit einer ersten Verbindungsleitung (28) mit der Verteilerleitung 75 im Hausstromunterverteiler (10) verbunden ist, dass das Steuerungsgerät (26) mit dem Smartmeter (20) mit einer Signalverbindung so verbunden ist, dass bedarfsweise Signale zwischen dem Steuerungsgerät (26) und dem Smartmeter (20) austauschbar sind oder wenigstens vom Smartmeter (20) generierte Signale vom Steuerungsgerät (26) empfangbar sind, dass das Steuerungsgerät (26) mit dem Internet verbunden ist, dass das Steuerungsgerät (26) mit jedem der an den zweiten (88) oder dritten Verbindungselementen (96, 104) angeschlossenen Haustechnikgeräten für einen Daten- oder Signalaustausch verbunden ist, und dass das Steuerungsgerät (26) so eingerichtet ist, dass die angeschlossenen Haustechnikgeräte durch das Steuerungsgerät (26) ansteuerbar sind.

11. Hausstromunterverteilersystem nach Anspruch 10, **dadurch gekennzeichnet, dass** das Steuerungsgerät (26) mit dem Smartmeter (20) mit einem Datenkabel oder mit einer kabellosen Datenübermittlungsvorrichtung als Signalverbindung verbunden ist.

12. Hausstromunterverteilersystem nach Anspruch 10 oder 11, **dadurch gekennzeichnet, dass** zwischen dem Steuerungsgerät (26) und der ersten Verbindungsleitung (28) ein Umspanngerät (120) außerhalb des Hausstromunterverteilers (10) angeordnet und elektrisch zwischengefügt ist, durch welches Umspanngerät (120) eine von der ersten Verbindungsleitung (28) zur Verfügung gestellten Spannung in eine vom Steuerungsgerät (26) benötige Spannung umgewandelt ist.

13. Hausstromunterverteilersystem nach einem der Ansprüche 10 bis 12, **dadurch gekennzeichnet, dass** das Steuerungsgerät (26) mit einem Signalunterverteiler (122) verbunden ist, der außerhalb des Hausstromunterverteilers (10) angeordnet ist und durch den ein Signaleingangs- und ein -ausgangselement des Steuerungsgerätes (26) mit einer Vielzahl von Signalverbindungen von Haustechnikgeräten verbindbar ist.
